# EUROPEAN PATENT APPLICATION

(11) **EP 2 221 505 A1**
(43) Date of publication of application: **25.08.2010**
(21) Application number: 09007973.2
(22) Date of filing: 18.06.2009
(51) Int. Cl.: F16G 15/04, A01B 61/02, A01B 61/00

(54) **Programmed release retaining device for the element protecting the cardanic transmission joint between a tractor and a towed machine**

(30) Priority: 20.02.2009 IT MI20090233
(71) Applicant: Benzi & Di Terlizzi s.r.l., 20065 Inzago MI (IT)
(72) Inventor: Benzi, Vito, 20065 Inzago (MI) (IT)
(74) Representative: Ferraiolo, Ruggero

(57) **Abstract**

A conical guide element (11) is fixed on an intermediate end (8) of a connection element (5) and an elastic element (14) is held within the guide element which may deform in radial direction and is fixed on the other intermediate end (9) of the connection element, the elastic element (14) being adapted to deform as a consequence of the increasing traction exerted by the connection element for coming out of the smallest (16) of the two outlets in the conical guide element once the traction reached the programmed limit (F) - (Fig. 2).

## Description

The present invention refers to a retaining device adapted to retain a first object sliding on a second object, in particular it refers to a programmed release retaining device for retaining a protection element that protects the cardanic transmission between a tractor and a towed machine, still in particular, between a tractor and a farm machine so as to prevent the protection element from sliding in the same direction the cardanic transmission rotates, the device being able to disengage without breaking once the traction load exceeds a predetermined limit value, as prescribed by regulations (in this case the Italian regulation EN ISO 5674 is referred to).

### Field of the Invention

The field of the invention is that of the retaining devices where the release is programmed, the devices being designed in order to prevent a protection element from being drawn in rotation together with the transmission itself, the protection element and the transmission element being coupled by a supporting element which permits the relevant rotation.

These devices must hold a minimum guaranteed traction load and release the coupling under a maximum traction predetermined load.

### The Prior Art

Retaining devices used in farm machines to said purpose are unknown to the applicant, except for a spring device which may be re-coupled after releasing once the maximum predetermined load is reached. Such a device is mounted on some cardanic transmission elements produced by Bondioli & Pavesi sited in Suzzara (MN) - Italy and will be referred to as Bondioli device in the following.

### Drawbacks in the Prior Art

Bondioli device has the drawback of, once opened under the limit load, the machine must be stopped in order to reset the device by using a screwdriver. The device is not easy to handle because of the small dimensions of its elements: a small cover and a small screw.

### Base of the Invention

The invented contrivance is a programmed release retaining device comprised in a connection means conventionally stretched between a first point on a tractor and a second point on the protection element, the first point being referred to in the following as - upstream point - and the second point being referred to in the following as - downstream point - and is **characterized in that** it comprises, put within the connection means, a conical guide element fixed to an intermediate end of said means, wherein an elastic deformable element is kept, fixed to the other intermediate end of said means, which elastic deformable element is capable to deform under a pretedermined limit traction load in order to come out of the smallest exit in the conical guide element and interrupt the connection between the upstream point and the downstream point.

The conical guide element is substantially a C shaped flat element wherein the elastic element is an elastic ring that may deform in the radial direction, the ring diameter being calculatedly higher than the smallest opening in the guide element.

Alternatively, the conical guide element is a substantially tubular element wherein the elastic element deformable in the radial direction has the shape of a disc, a ring, a sphere or an olive whose diameter is calculatedly higher than the smallest opening in the guide element.

Both types of guide elements may be provided with a longitudinal aperture for allowing a rapid mounting of the device components after a release.

Preferably, both types of guide element have an inside seat wherein a peripheral part of the deformable elastic element sets in that working condition where the traction exerted by the connection means is null or is within normal working values. Once the traction increases, the deformable elastic element leaves that seat and slides along the guide element until it stops in the smallest exit and, deformed by the predetermined limit traction, disengages from the guide element.

According to a further embodiment of the device based on the same solution as described above (elastic relationship between said two elements), the guide element is fixed to an intermediate end of the connection means and has a small exit capable to deform elastically for allowing the passage of an indeformable substantially spherical element fixed to another intermediate end of the connection means, once the predetermined limit traction is exceeded.

### Advantages of the invention

The advantage of the invention substantially resides in permitting to reset the device after a release without using any tool.

### Best modes for carrying out the invention

Best modes for carrying out the invention will be described in detail by examples of embodiments and the aid of drawings wherein:
- Fig. 1 is a first perspective view,
- Fig. 2 is a second perspective view,
- Fig. 3 is a vertical side view,
- Fig. 4 is a vertical front view,
- Fig. 5 is a first assembly of views partly sectioned,
- Fig 6 is a second assembly of views partly sectioned,
- Fig. 7 is a vertical view partly sectioned,
- Fig. 8 presents a plan view and a side view.

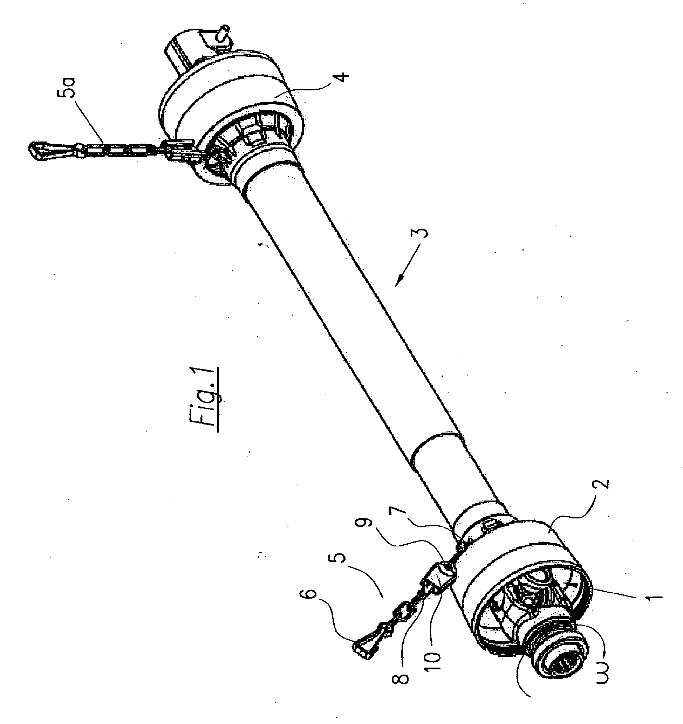

Figure 1 shows the assembly comprising part of the cardanic transmission 1 on the tractor side, the protection element 2 for the cardanic transmission, tubes 3 for protecting the cardanic shaft and the protection element 4 for the cardanic transmission on the towed machine side. The connection element in the form of a chain 5 is fixed between the upstream point 6 on the tractor and the downstream point 7 on the protection element. Within the chain, between said two points, there are two intermediate points 8, 9 wherebetween the invented device 10 is located. Due to the rotation ω that the tractor imparts to the cardanic transmission 1 it clearly appears as the function of the chain 5 is to prevent the protection element 2 from rotating in the same direction ω. As it is known, the rotation of the cardanic shaft causes an entrainment of the protection ring on its seat on the transmission fork, in spite of the lubrification which should reduce the friction as well as said entrainment.

According to the invention, once the coupling between the fork and the seat is not correct so that the resistance against rotation exceeds a predetermined value, then the device, as a whole shown by 10, opens without breaking and may be closed again with the cardanic shaft at rest.

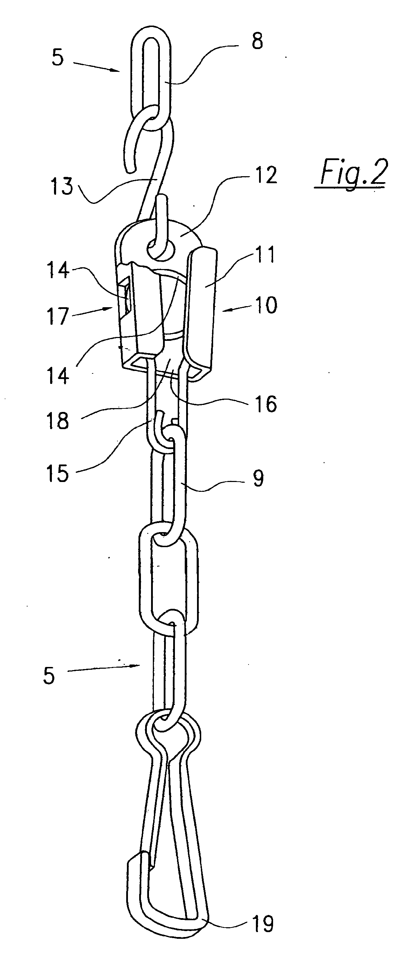

Figure 2 shows the retaining device 10 located along the chain 5. The retaing device 10 comprises a flat conical guide element 11 shaped as a C, fixed to the intermediate chain end 8 by means of the eyelet 12 held by the hook 13. Into the conical guide element 11 an elastic deformable element 14 is held in the form of a helical spring which is fixed with its extension 15 to the other intermediate end 9 of the chain 5. The helical sprig 14 is adapted to deform in the radial direction under a predetermined limit traction load in order to exit from the smallest aperture 16 in the conical guide element 11 and open the device. The guide element 11 is provided with two opposed recesses 17 where the peripheral parts of the elastic deformable element 14 may set for stopping there during the normal working conditions, when the traction exerted by the chain is null or within normal values. Finally, the figure shows that the guide element in provided with a longitudinal aperture 18, recalling the aperture in a C, which is useful to mount rapidly the device components after a release. A spring catch 19 assures chain 5 to a downstream point on the protection element indicated by 2 in Fig.1.

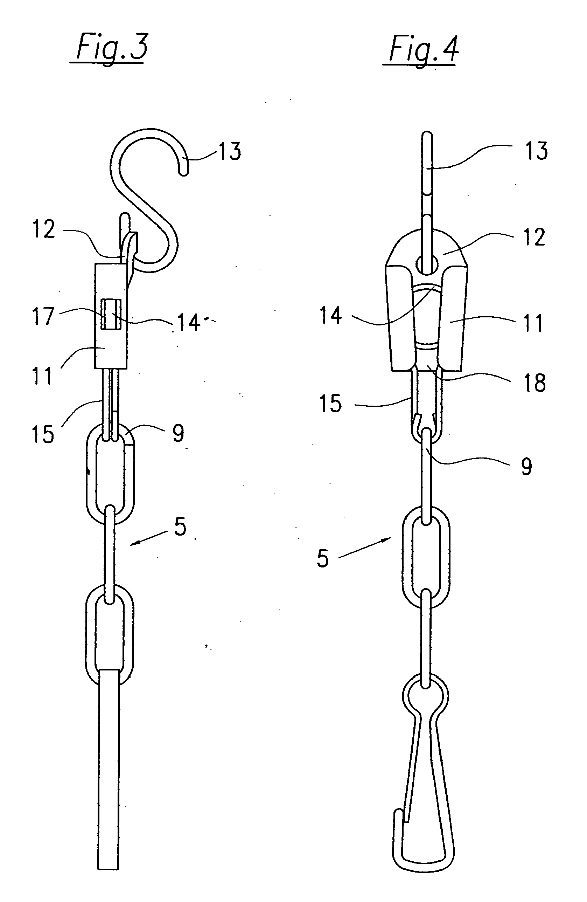

Figures 3, 4 respectively show a vertical side view and a vertical front view of device 10 with the hook 13 and the elements of chain 5 located downstream the same device. The parts of the device are identified by the same reference numbers as used in Figure 2.

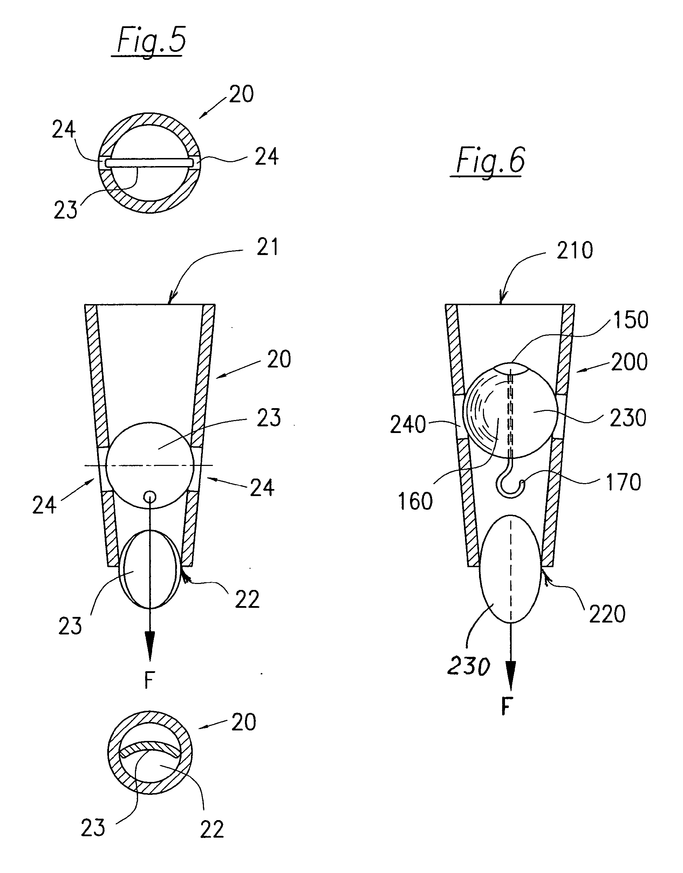

Fig. 5 shows a conical guide element 20 of substantially tubular shape with its larger aperture 21 connected with one of the two intermediate points of the chain (elements not shown in the figure) and with its smaller aperture 22 where an elastic deformable element 23 shall pass through. The latter is a steel disc that in the normal working conditions is held into the two diametrally opposed recesses 24 made in the guide element. The sizes and the mechanical characteristics of the steel disc are defined depending on the dimensions of aperture 22 and on the predetermined limit traction load so that, once the normal traction value is exceeded, the disc exits from the recesses 24, proceeds towards the aperture 22 while bending along the path that becomes more and more tight until the disc exits from the aperture as the traction F reaches the predetermined limit value.

Fig. 6 shows a conical guide element 200 of substantially tubular shape with its large aperture 210 connected with one of the two intermediate points of the chain (elements not shown in the figure) and with its small aperture 220 wherethrough the elastic deformable element 230 shall pass. The latter is a neoprene sphere bearing at the end opposite to the small aperture 220 a cap 150 as attachment means for a wire 160 passing though the sphere to hold the traction exerted by the chain by the hook 170. In the normal working conditions the sphere is hold in the diametrically opposite recesses 240 provided into the guide element. The sizes and mechanical characteristics of the neoprene sphere are defined in accordance with the size of aperture 220 and the predetermined limit load so that, once the normal traction value is exceeded, the sphere exits from the two recesses 240, proceeds towards aperture 220 while compressing along the path which becomes more and more tight until it exits from the aperture as the traction F reaches the predetermined limit load.

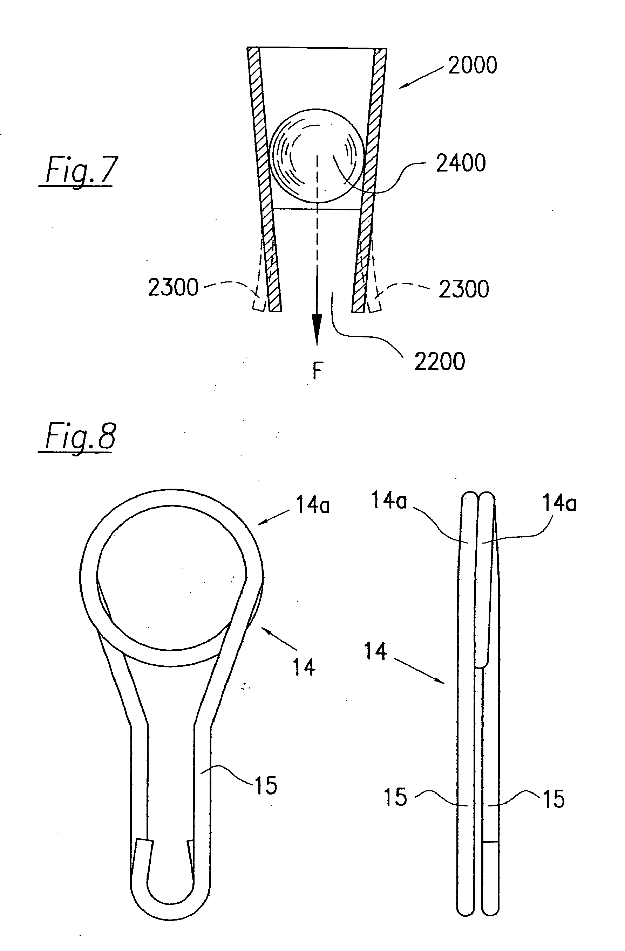

Fig. 7 shows a conical guide element 2000 which is fixed with its upper end to an intermediate end of a chain (parts not shown in the figure) and is provided with a small aperture 2200 defined by two diametrically opposite elements in the form of elastic blades adapted to elastically deform in order to let pass a holding element in the form of indeformable sphere 2400, fixed to the other intermediate end of the chain, as the traction F reaches the predetermined limit load. It will be realized that the blade elements may be more than two and the holding element may be in the form of an olive.

Fig. 8 shows an elastic element 14 which may deform in radial direction, is in the form of helicoidal spring and comprises two overlapped coils 14a having same diameter, each one being downwardly extended in an element 15 provided with a hook for clamping a chain not shown. It will be realized that the spring may have half a coil, two coils, etc. in order to face the required function. The mechanical characteristics and sizes of the spring are so defined as to allow exit from the smallest aperture in the conical guide element, as explained in the description and with reference to figure 2.

## Claims

1. Programmed release retaining device (10) comprised in a connection element (5) conventionally stretched between a first point (6) on a tractor and a second point (7) on the element protecting the cardanic transmission joint that transfers the motion (ω) from the tractor to the towed machine and is **characterized in that** the device comprises a conical guide element (11), fixed on an intermediate end (8) of the connection element (5), wherein an elastic element (14) is held which may deform in radial direction and is fixed on the other intermediate end (9) of the connection element, the elastic element being adapted to deform as a consequence of the increasing traction exerted by the connection element for coming out of the smallest (16) of the two outlets in the conical guide element once the traction reached the programmed limit (F).

2. Retaining device according to claim 1 **characterized in that** the conical guide element (11) is a substantially flat element in the shape of C and the elastic element (14) is a helical spring (14a), comprising a half coil, two or more overlapped coils of same diameter, deformable in radial direction, whose outer diameter is selected higher than said smallest outlet (16) in the conical guide element.

3. Retaining device according to claim 1 **characterized in that** the conical guide element is a substantially tubular element (20) wherein the deformable in the radial direction elastic element (23) has the shape of a disc, a ring or a sphere or an olive whose diameter is selected higher than said smallest outlet (22) in the guide element.

4. Retaining device according to claims 1- 3 **characterized in that** the guide elements (11) are provided with inner seats (17) wherein a peripheral part of the deformable elastic element is set.

5. Retaining device according to claims 1- 4 **characterized in that** the guide element (11) is provided with a longitudinal opening (18).

6. Programmed release retaining device (1000) comprised in a connection element (5) conventionally stretched between a first point (6) on a tractor and a second point (7) on the protection element for the cardanic transmission joint that transfers the motion (ω) from the tractor to the towed machine and is **characterized in that** the conical guide element (2000) fixed on an intermediate end of the connection element is provided with a small opening (2200) adapted to deform elastically in order to allow the passage of an indeformable spheric element (2400) fixed on the other end of the connection element.

## Amended claims

### Amended claims in accordance with Rule 137(2) EPC.

**1.** Programmed release retaining device (10) comprised in a connection element (5) conventionally stretched between a first point (6) on a tractor and a second point (7) on the element protecting the cardanic transmission joint that transfers the motion (ω) from the tractor to the towed machine and is **characterized in that** the device comprises a conical guide element (11) provided with opposite apertures, upper and lower, fixed on an intermediate end (8) of the connection element (5), wherein an elastic element (14) is held which may deform in radial direction and is fixed on the other intermediate end (9) of the connection element, the elastic element being adapted to deform as a consequence of the increasing traction exerted by the connection element for coming out of the smallest (16) of the opposite apertures in the conical guide element once the traction reached the programmed limit (F).

**2.** Retaining device according to claim 1 **characterized in that** the conical guide element (11) is a substantially flat element in the shape of C and the elastic element (14) is a helical spring (14a), comprising a half coil, two or more overlapped coils of same diameter, deformable in radial direction, whose outer diameter is selected higher than said smallest outlet (16) in the conical guide element.

**3.** Retaining device according to claim 1 **characterized in that** the conical guide element is a substantially tubular element (20) wherein the deformable in the radial direction elastic element (23) has the shape of a disc, a ring or a sphere or an olive whose diameter is selected higher than said smallest outlet (22) in the guide element.

**4.** Retaining device according to claims 1- 3 **characterized in that** the guide elements (11) are provided with inner seats (17) wherein a peripheral part of the deformable elastic element is set.

**5.** Retaining device according to claims 1- 4 **characterized in that** the guide element (11) is provided with a longitudinal opening (18).
